# EUROPÄISCHE PATENTSCHRIFT

(11) **EP 1 208 306 B1**
(45) Veröffentlichungstag und Bekanntmachung des Hinweises auf die Patenterteilung: **13.08.2003**
(21) Anmeldenummer: 00927194.1
(22) Anmeldetag: 11.05.2000
(51) Int. Cl.: F16B 39/24

(54) **SCHRAUBENSICHERUNG**
SCREW LOCKING DEVICE
FREIN DE VIS

(30) Priorität: 03.09.1999 DE 29915560 U
(43) Veröffentlichungstag der Anmeldung: 29.05.2002
(73) Patentinhaber: Wolf-Garten GmbH & Co. KG, 57518 Betzdorf (DE)
(72) Erfinder: STAUDT, Gerhard, D-66839 Schmelz (DE)
(74) Vertreter: Koch, Günther, Dipl.-Ing.
(86) Internationale Anmeldenummer: EP0004258
(87) Internationale Veröffentlichungsnummer: WO01018410

(56) Entgegenhaltungen:
- EP-A- 0 131 556
- WO-A-94/03736
- US-A- 3 263 727

## Beschreibung

Die Erfindung bezieht sich auf eine Schraubensicherung der im Oberbegriff des Patentanspruchs 1 angegebenen Gattung. Derartige Schraubensicherungen sind in den verschiedensten Ausführungsformen bekannt geworden. Im allgemeinen bestehen die Zahnscheiben aus Federblech oder Kunststoff, die derart elastisch ausgebildet sind, daß in einer bestimmten, durch das Schraubgewinde des Gelenkbolzens bestimmten Spannstellung eine Arretierung erfolgt und eine Verminderung der Spannung durch Lösen der Schraube verhindert wird. Derartige Schraubensicherungen können überall dort Anwendung finden, wo das Lösen einer Schraube oder einer Mutter verhindert werden soll, selbst wenn die damit verbundenen Bauteile einer Vibration ausgesetzt werden. Beispiele dafür sind in der DE-OS 16 25 279, der DE-OS 24 13 760 und der US-PS 5 314 279 beschrieben.

Ein spezieller Anwendungszweck der erfindungsgemäßen Schraubensicherung ist die Verwendung in Verbindung mit Gartenscheren, insbesondere Astscheren. Hierbei besteht die Forderung, daß die beiden Scherenschenkel gelegentlich durch Abschrauben des Gelenkbolzens voneinander getrennt werden, um beispielsweise einen Klingenwechsel durchzuführen oder die Schere zu reinigen. Durch wiederholte Demontage und Montage werden die üblichen Schraubensicherungen häufig in der Weise beansprucht und deformiert, daß ihre Sicherungswirkung nachläßt und oft der Gelenkbolzen stärker angezogen wird, als es für die Funktion der gegeneinander verschwenkbaren Scherenschenkel sinnvoll ist.

Der Erfindung liegt daher die Aufgabe zugrunde, eine insbesondere für Gartenscheren geeignete gattungsgemäße Schraubensicherung derart auszubilden, daß die Funktionsfähigkeit der Drehsicherung auch nach wiederholten Demontage- und MontageVorgängen sicher erhalten bleibt.

Gelöst wird die gestellte Aufgabe durch die im Kennzeichnungsteil des Patentanspruchs 1 angegebenen Merkmale. Dadurch, daß die Rastzähne am Federteller nicht in Form eines durchgehenden Zahnkranzes angeordnet sind, wie dies bei bekannten Schraubsicherungen der Fall ist, sondern als Einzelzähne mit dem Rastkranz der Rastscheibe zusammenwirken, können diese am Innenund Außenring festgelegten Stege, die die Rastzähne bilden, um eine radial verlaufende Achse ausweichen und nach Überschreiten des jeweiligen Zahnes in die Raststellung zurückkehren. Hierdurch ergibt sich eine bessere Elastizität bei konstant bleibender Sperrkraft.

Zweckmäßigerweise ist der Umfangsabstand zwischen zwei radialen Zahnstegen des Federtellers auf die Zahnteilung der Rastscheibe derartig abgestimmt, daß zwischen zwei an den Stegzähnen angreifenen Zähnen des Zahnkranzes der Rastscheibe ein materialfreier Zwischenraum von einem Zahn oder mehreren Zähnen verbleibt. Dies hat zur Folge, daß bei der Relativdrehung zwischen Rastscheibe und Federteller die Raststege eine radiale Zugkraft nach außen auf den Innenring ausüben, so daß dieser elastisch polygonal verformt wird und nach Eingreifen der Zähne in die Rastung in die ursprüngliche Form zurückkehrt, wodurch der Weg des elastischen Ausweichens vergrößert wird.

Der Widerstand der Federarme gegen Durchbiegung ist so groß gewählt, daß dem beim Schneiden eines Astes oder dergleichen auftretenden Drehmoment, das ein Lösen der Gelenkschraube zur Folge haben könnte, ein so hoher Widerstand entgegengesetzt wird, daß sich die Schraube nicht lösen kann. Der dauerhaft gute Schraubensicherungssitz ist dadurch bedingt, daß sich die beim Verrasten ergebenden Durchbiegungen der radialen Federstege und des Innenrings immer im elastischen Bereich bewegen.

Einer der beiden Teile, nämlich Rastscheiber oder Federteller, ist mit dem das Schraubgewindeloch für den Gelenkbolzen aufweisenden Scherenschenkel drehfest verbindbar, während der andere Teil drehfest mit dem Gelenkbolzen verbindbar ist. Die aus Federteller und Rastscheibe bestehende Schraubensicherung kann aus beliebigem elastischem Material bestehen. Vorzugsweise besteht sie jedoch aus einem entsprechend den Forderungen ausgewählten elastischen Kunststoff.

Ausgestaltungen der Erfindung ergeben sich aus den Unteransprüchen.

Nachstehend werden Ausführungsbeispiele der Erfindung anhand der Zeichnung beschrieben; in der Zeichnung zeigen:
Fig. 1 zeigt die Rastscheibe der erfindungsgemäß ausgebildeten Schraubensicherung in unterschiedlichen, auch perspektivischen Darstellungen;
Fig. 2 zeigt den Ring-Federteller der erfindungsgemäßen Schraubensicherung in verschiedenen, auch perspektivisch gezeichneten Darstellungen;
Fig. 3 ist in größerem Maßstab eine Schnittansicht einer Abwicklung der Verzahnung der Rastscheibe gemäß Fig. 1;
Fig. 4a ist ein Schnitt der Abwicklung der Rastzähne des Federtellers gemäß Fig. 2;
Fig. 4b ist eine axiale Ansicht der abgewickelten Rastzähne des Federtellers;
Fig. 5a ist eine der Fig. 4a entsprechende Schnittansicht einer abgewandelten Ausführungsform der Zähne des Federtellers;
Fig. 5b ist eine der Fig. 4b entsprechende Ansicht der Zähne gemäß der Schnittansicht nach Fig. 5a.

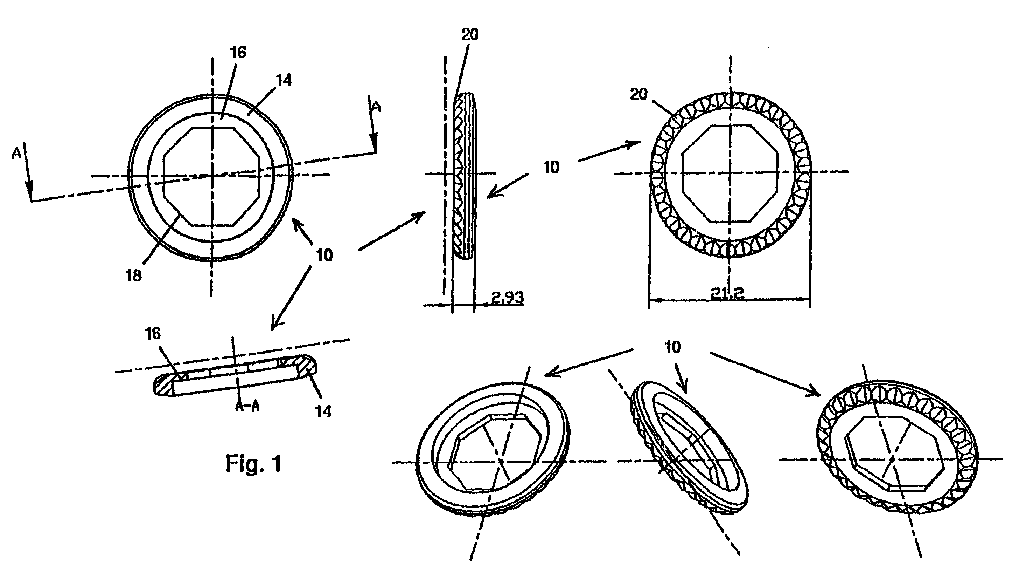

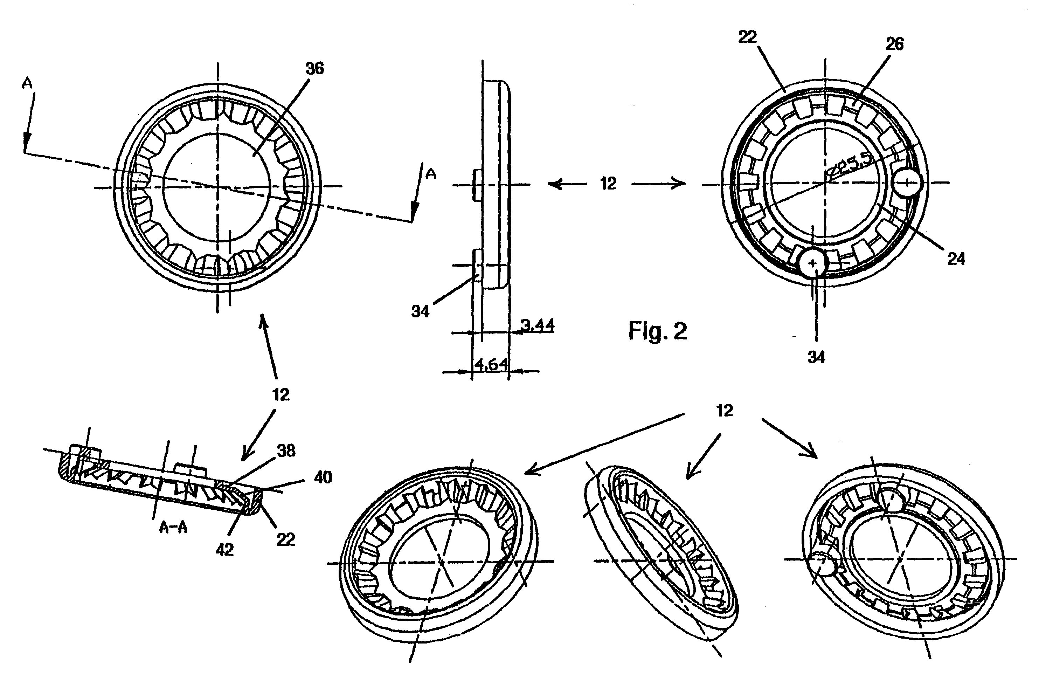

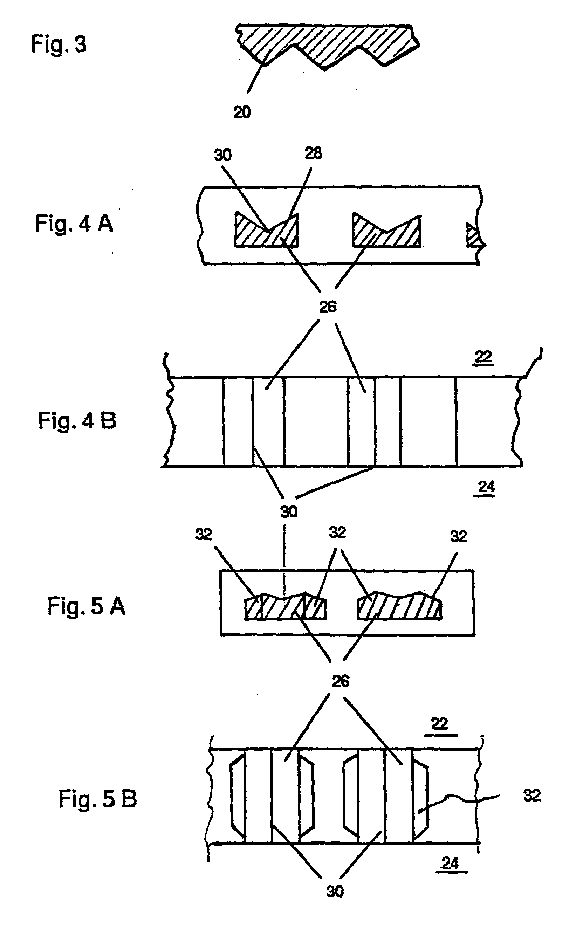

Die erfindungsgemäße Schraubensicherung besteht aus einer Rastscheibe 10 (Fig. 1) und einem Ring-Federteller 12 (Fig. 2). Die tellerförmig ausgebildete Rastscheibe 10 weist einen umlaufenden erhöhten Rand 14 und einen flachen Tellerboden 16 auf, in dem ein Achtkant 18 angeformt ist, mit dem die Rastscheibe 10 drehfest auf einem Achtkant der Gelenkschraube aufsetzbar ist, die zwei Scherenschenkel miteinander verbindet. Die Rastscheibe 10 weist einen axialen Zahnkranz 20 mit radial verlaufenden prismatischen Rastzähnen auf. Dieser Zahnkranz 20 ist, wie aus Fig. 1 ersichtlich, konisch ausgebildet. Der Federteller weist einen über die gesamte axiale Länge verlaufenden Außenring 22 und einen am Tellerboden befindlichen Innenring 24 auf. Zwischen Innenring 24 und Außenring sind radiale Stege 26 angeformt, die, wie aus den Figuren 4a, 4b und 5a, 5b ersichtlich, eine V-förmige Rastausnehmung 28 mit einer Scheitellinie 30 aufweisen, in die die Rastzähne des Zahnkranzes 20 der Rastscheibe 10 eingreifen. Die radialen Stege sind in Umfangsrichtung in einem Abstand angeordnet, der einer Zahnteilung der Rastscheibe entspricht. Die einzelnen Stege können daher einzeln und unabhängig voneinander um radial verlaufende Achsen frei kippen, und in den Zwischenraum greifen die Zähne des Zahnkranzes 20 der Rastscheibe 10 ein. Bei dem Ausführungsbeispiel nach Fig. 5a, 5b sind seitlich an die Stege 26 Auflaufschrägen 32 angeformt, auf die die Zähne des Zahnkranzes 20 auflaufen. Bei dieser Auflaufbewegung können sich die Stege 26 um ihre radiale Achse verdrehen, wodurch die angestrebte Wirkung zustandekommt.

Der Federteller 12 weist an seiner dem Scherenschenkel (Untergriffhebel) zugewandten Seite Nocken 34 auf, die formschlüssig in entsprechend geformte Ausnehmungen des Scherenschenkels eingreifen und eine drehfeste Verbindung mit diesem Scherenschenkel herstellen. Die Mittelöffnung 36 des Federtellers ist entsprechend dem Durchmesser der in der Zeichnung nicht dargestellten Gelenkschraube ausgebildet.

Der äußere Durchmesser der Rastscheibe 10 entspricht dem Innendurchmesser des Außenrings 22 des Federteller, so daß die Rastscheibe in diesen Federteller einpaßt, und die Zähne des Zahnkranzes 20 mit den radialen Stegen 26 zusammenwirken können, die die Gegenverzahnung des Federtellers bilden. In der Schnittansicht A-A gemäß Fig. 2 ist die radiale Gestalt der Raststege 26 deutlicher ersichtlich. Demgemäß bestehen die Stege aus einem in der Ebene des Tellerbodens liegenden Abschnitt 38, einem auf einem flachen Konus liegenden Mittelabschnitt 40 und einem im wesentlichen senkrecht zum Tellerboden verlaufenden äußeren Abschnitt 42.

Die radialen Stege 26 sind elastisch als Federarme ausgebildet, bei denen der Widerstand gegen Durchbiegung so groß gewählt ist, daß dem beim Schneiden mit der Schere auftretenden Drehmoment, das ein Lösen der Gelenkschraube bewirken könnte, ein so hoher Widerstand entgegengesetzt wird, daß die Schraube gesichert bleibt. Ein gleichbleibend guter Schraubensitz ist dadurch bedingt, daß sich die beim Verrasten ergebenden Durchbiegungen der Federarme immer im elastischen Bereich bewegen, so daß eine Beschädigung der Rastarme ausgeschlossen ist. Auch bei häufigem Lösen der mit der Schraubensicherung zusammenwirkenden Schraube, beispielsweise beim Klingenwechsel oder Reinigen der Schere, ergibt sich keine Beeinträchtigung der Funktionsfähigkeit.

Die Anordnung der die Verzahnung bildenden radialen Stege des Federtellers und der Zahnteilung auf dem Zahnkranz der Rastscheibe ist derart getroffen, daß jeweils ein Zahn des Zahnkranzes der Rastscheibe im Freiraum des Federtellers, d.h. zwischen jeweils zwei Stegen liegt, während die benachbarten Zähne in die V-förmige Ausnehmung der Stege eingreifen.

### Bezugszeichenliste

- 10: Rastscheibe
- 12: Ring-Federteller
- 14: Rand
- 16: Tellerboden
- 18: Achtkant
- 20: Zahnkranz
- 22: Außenring
- 24: Innenring
- 26: radiale Stege
- 28: Rastausnehmung
- 30: Scheitellinie
- 32: Auflaufschrägen
- 34: Nocken
- 36: Mittelöffnung
- 38: Abschnitt
- 40: Mittelabschnitt
- 42: äußerer Abschnitt

## Patentansprüche

1. Schraubensicherung, insbesondere für Gartenscheren, bestehend aus einem auf einem Scherenschenkel drehfest aufsetzbaren Ring-Federteller (12), der einen axial gerichteten Zahnkranz (26, 28) aufweist, und aus einer auf einem Gelenkbolzen drehfest aufsetzbaren Rastscheibe (10) mit einem axial gerichteten Zahnkranz (20), wobei die Zahnkränze zusammenwirken, um eine Relativdrehung des Gelenkbolzens zu dem Scherenschenkel zu vermeiden,
**dadurch gekennzeichnet,**
**daß** der Zahnkranz des Federtellers (12) von radialen Stegen (26) gebildet ist, die an einem Außenring (22) und einem Innenring (24) des Federtellers angeformt und in Umfangsrichtung in einem Abstand zueinander angeordnet sind

2. Schraubensicherung nach Anspruch 1,
**dadurch gekennzeichnet,**
**daß** der Abstand der Stege (26) in Umfangsrichtung einer Zahnteilung der Rastscheibe (10) entspricht.

3. Schraubensicherung nach den Ansprüchen 1 und 2,
**dadurch gekennzeichnet,**
**daß** die Stege (26) im Querschnitt V-förmig (28) ausgebildet sind, um eine Rast für einen Zahn des Zahnkranzes (20) der Rastscheibe zu bilden.

4. Schraubensicherung nach einem der Ansprüche 1 bis 3,
**dadurch gekennzeichnet,**
**daß** die Zahnstege (26) in Umfangsrichtung mit einer Auflaufschräge (32) versehen sind.

5. Schraubensicherung nach einem der Ansprüche 1 bis 4,
**dadurch gekennzeichnet,**
**daß** die Stege (26) einen inneren am Innenring (24) ansetzenden Abschnitt (38) parallel zur Tellerebene, einen schrägen Mittelabschnitt (40) und einen äußeren Endabschnitt (42) aufweisen, der im wesentlichen senkrecht zur Tellerebene steht.

6. Schraubensicherung nach einem der Ansprüche 1 bis 5,
**dadurch gekennzeichnet,**
**daß** die Zähne des Zahnkranzes (20) der Rastscheibe auf einem Konusmantel liegen.

7. Schraubensicherung nach einem der Ansprüche 1 bis 6,
**dadurch gekennzeichnet,**
**daß** die tellerförmig ausgebildete Rastscheibe im Tellerboden eine polygonale Öffnung (18) zur drehfesten Verbindung mit einem entsprechend gestalteten Abschnitt eines Gelenkbolzens aufweist.

8. Schraubensicherung nach einem der Ansprüche 1 bis 6,
**dadurch gekennzeichnet,**
**daß** der Federteller axial vorstehende Rippen zur drehfesten Verbindung mit einem Scherenschenkel aufweist.

9. Schraubensicherung nach einem der Ansprüche 1 bis 8,
**dadurch gekennzeichnet,**
**daß** Rastscheibe (10) und Ring-Federteller (12) aus einem elastischen Kunststoff bestehen.

## Claims

1. Screw retention device, especially one for garden pruners or secateurs, comprising an annular spring collar (12) adapted to be set in a non-rotatable manner on one leg of the pruner and featuring an axially aligned toothed ring (26, 28), and further comprising a locking disk (10) adapted to be set in a non-rotatable manner on a hinge pin and having an axially aligned toothed ring (20), the toothed rings cooperating together in order to avoid torsion of the hinge pin in relation to the pruner leg,
**characterised in that** the toothed ring of the spring collar (12) is constituted by radial lands (26) which are formed on an outer ring (22) and an inner ring (24) of the spring collar and are spaced apart from one another in the circumferential direction.

2. Screw retention device according to claim 1,
**characterised in that** the spacing of the lands (26) in the circumferential direction corresponds to the spacing between two teeth of the locking disk (10).

3. Screw retention device according to claims 1 and 2,
**characterised in that** the lands (26) are configured with a V-shaped cross-section (28) in order to form a catch for a tooth of the toothed ring (20) on the locking disk.

4. Screw retention device according to any of claims 1 to 3,
**characterised in that** the tooth lands (26) are provided with a ramp (32) in the circumferential direction.

5. Screw retention device according to any of claims 1 to 4,
**characterised in that** the lands (26) have an inner section (38) parallel to the plane of the collar and joined to the inner ring (24), an inclined centre section (40) and an outer end section (42) which is substantially perpendicular to the plane of the collar.

6. Screw retention device according to any of claims 1 to 5,
**characterised in that** the teeth of the toothed ring (20) on the locking disk lie on a cone's generating surface.

7. Screw retention device according to any of claims 1 to 6,
**characterised in that** in the collar floor the locking disk which is configured in the shape of a collar has a polygonal opening (18) for non-rotatable connection to a correspondingly shaped section of a hinge pin.

8. Screw retention device according to any of claims 1 to 6,
**characterised in that** the spring collar has axially protruding fins for connecting it in a non-rotatable manner to a pruner leg.

9. Screw retention device according to any of claims 1 to 8,
**characterised in that** the locking disk (10) and annular spring collar (12) are made of a flexible plastic.

## Revendications

1. Frein de vis, notamment pour cisailles de jardin, comprenant une rondelle élastique annulaire (12) pouvant être mise en place avec verrouillage rotatif sur une branche de cisaille, et munie d'une couronne dentée (26, 28) orientée axialement ; et un disque encliquetable (10) pouvant être mis en place avec verrouillage rotatif sur un tenon d'articulation, et pourvu d'une couronne dentée (20) orientée axialement, lesdites couronnes dentées coopérant mutuellement pour éviter une rotation relative du tenon d'articulation vis-à-vis de la branche de cisaille,
**caractérisé par le fait**
**que** la couronne dentée de la rondelle élastique (12) est matérialisée par des membrures radiales (26) qui font corps avec une bague extérieure (22) et avec une bague intérieure (24) de ladite rondelle élastique, et sont agencées avec espacement mutuel dans la direction périphérique.

2. Frein de vis selon la revendication 1,
**caractérisé par le fait**
**que** l'espacement des membrures (26), dans la direction périphérique, correspond à un pas de denture du disque encliquetable (10).

3. Frein de vis selon les revendications 1 et 2,
**caractérisé par le fait**
**que** les membrures (26) sont réalisées de configuration en V (28) en coupe transversale, de manière à former un cran destiné à une dent de la couronne dentée (20) du disque encliquetable.

4. Frein de vis selon l'une des revendications 1 à 3,
**caractérisé par le fait**
**que** les membrures (26) de la denture sont pourvues d'un biseau ascendant (32) dans la direction périphérique.

5. Frein de vis selon l'une des revendications 1 à 4,
**caractérisé par le fait**
**que** les membrures (26) comprennent une région intérieure (38) contiguë à la bague intérieure (24) parallèlement au plan de la rondelle, une région centrale inclinée (40), et une région extrême extérieure (42) essentiellement perpendiculaire audit plan de la rondelle.

6. Frein de vis selon l'une des revendications 1 à 5,
**caractérisé par le fait**
**que** les dents de la couronne dentée (20) du disque encliquetable se trouvent sur une enveloppe conique.

7. Frein de vis selon l'une des revendications 1 à 6,
**caractérisé par le fait**
**que** le disque encliquetable réalisé en forme de rondelle comporte, dans le fond de ladite rondelle, un orifice polygonal (18) affecté à la liaison, en verrouillage rotatif, avec un tronçon d'un tenon d'articulation doté d'une configuration correspondante.

8. Frein de vis selon l'une des revendications 1 à 6,
**caractérisé par le fait**
**que** la rondelle élastique présente des nervures saillant axialement en vue de la liaison, en verrouillage rotatif, avec une branche de cisaille.

9. Frein de vis selon l'une des revendications 1 à 8,
**caractérisé par le fait**
**que** le disque encliquetable (10) et la rondelle élastique annulaire (12) consistent en une matière plastique douée d'élasticité.
